# EUROPÄISCHE PATENTANMELDUNG

(11) **EP 0 974 386 A1**
(43) Veröffentlichungstag der Anmeldung: **26.01.2000**
(21) Anmeldenummer: 99112818.2
(22) Anmeldetag: 02.07.1999
(51) Int. Cl.: B01D 17/025, B01D 21/02, E03F 5/16, C02F 1/40

(54) **Abscheider mit Schlammfang**

(30) Priorität: 22.07.1998 DE 19832959
(71) Anmelder: PASSAVANT-WERKE AG, 65322 Aarbergen 7 (DE)
(72) Erfinder: Zimmermann, Bernd, 65623 Netzbach (DE); Sehr, Gerhard, 56370 Allendorf (DE); Helffenstein, Kurt, 65558 Flacht (DE); Eenens, Marc, 1853 Strombeek-Bever (BE)
(74) Vertreter: Glawe, Delfs, Moll & Partner

(57) **Zusammenfassung**

Die Erfindung bezieht sich auf einen Abscheider zum Abtrennen von Sinkstoffen und Leichtstoffen aus Wasser. Ein Abscheidebehälter (1) ist durch einen Trennboden (3) in eine obere Schlammfangkammer (5) und eine untere Abscheidekammer (7) geteilt, wobei die Schlammfangkammer (5) einen Einlauf (13) für das zu reinigende Wasser und die Abscheidekammer (7) einen Reinwasserablauf (27) mit Überlaufkante und einen Abzug für Leichtstoffe aufweist und wobei zwischen Schlammfangkammer (5) und Abscheidekammer (7) eine Verbindungsleitung (19) mit Überlauf in der Schlammfangkammer (5) vorgesehen ist.

Um einen einfachen, robusten und kompakten Aufbau sowie eine optimale Trennung der Sinkstoffe als auch der übrigen Inhaltsstoffe zu gewährleisten ist der Abscheider so ausgebildet, daß der Trennboden (3) gegen die Horizontale geneigt ist und in der Schlammfangkammer (5) einen nach unten spitz zulaufenden Schlammsumpf und in der Abscheidekammer (7) einen nach oben spitz zulaufenden Leichtstoffsammelraum begrenzt und daß eine Schlammabzugsleitung (17) im Bereich des tiefsten Punktes der Schlammfangkammer (5) und die Leichtstoffabzugsleitung (21) im Bereich des höchsten Punktes der Abscheidekammer angeschlossen sind.

Eine entsprechende Anwendung auf eine Stärkeabscheider wird beschrieben.

## Beschreibung

Die Erfindung betrifft einen Abscheider mit vorgeschaltetem Schlammfang, wobei es sich bei dem Abscheider vorzugsweise um einen Leichtstoffabscheider wie Fett-, Benzin- oder Ölabscheider handelt. Der Abscheider kann aber auch als Stärkeabscheider ausgebildet sein.

Aus DE-OS 28 37 554 ist ein Benzin- oder Ölabscheider bekannt mit einem zylindrischen Abscheidebehälter, der durch einen horizontalen Trennboden in eine obere Schlammfangkammer und eine untere Abscheidekammer unterteilt ist. Schlammfangkammer und Abscheidekammer sind durch einen lotrechten Schacht mit Überlaufkante in der Schlammfangkammer und Ausmündung in der Abscheidekammer verbunden. In der Abscheidekammer aufschwimmendes Benzin oder Öl kann über eine Überlaufkante in einen Ablaufraum und von dort nach unten in eine unterhalb der Abscheidekammer im Abscheidebehälter angeordnete Leichtstoffsammelkammer ablaufen. Ein kontrollierter Abzug lediglich der abgeschiedenen Leichtstoffe ohne mitgeführte Wasseranteile, und ebenso ein kontrollierter Abzug des in der Schlammfangkammer abgesetzten Schlammes ist dabei jedoch nicht möglich.

Aus DE-OS 42 35 454 ist eine Vorrichtung zum statischen Trennen von Flüssigkeitsgemischen, Emulsionen oder dergleichen bekannt, mit einem stehend zylindrischen Behälter, der durch einen schräg geneigten Trennboden in einen oberen, nach unten spitz zulaufenden Abscheideraum und in eine untere, nach oben spitz zulaufende Kammer unterteilt ist, wobei in der Kammer ein gesonderter, nachgeschalteter Abscheider untergebracht ist. Es handelt sich um einen zweistufigen Abscheider für das Abtrennen spezifisch leichterer Flüssigkeiten aus Wasser, wobei ein vorgeschalteter Schlammfang nicht vorgesehen ist.

Der Erfindung liegt die Aufgabe zugrunde, einen Abscheider, vorzugsweise Leichtflüssigkeitsabscheider mit vorgeschaltetem Schlammfang so auszubilden, daß er bei einfacher, robuster und kompakter Bauweise eine optimale Trennung sowohl der Sinkstoffe (Schlamm) als auch der übrigen Inhaltstoffe des zu reinigenden Wassers und einen einfachen Abzug der abgeschiedenen Stoffe unter Ausnützung der vorgegebenen hydrostatischen Druckverhältnisse ermöglicht.

Die erfindungsgemäße Lösung der Aufgabe für einen Leichtflüssigkeitsabscheider ist im Anspruch 1 angegeben. Eine weitere vorteilhafte Lösung bei Anwendung auf einen Stärkeabscheider ist in Anspruch 13 angegeben.

In den Zeichnungen sind verschiedene Ausführungsformen des erfindungsgemäßen Abscheiders in stark vereinfachten schematischen Ansichten dargestellt, und zwar, soweit nicht anders angegeben, jeweils in einer Ansicht von vorn, von der Seite und von oben. Es zeigen:
- Fig. 1 - 3: einen Fettabscheider in runder Bauweise;
- Fig. 4 - 6: einen Fettabscheider in Rechteckbauweise;
- Fig. 7 - 9: einen Fettabscheider ähnlich Fig. 1 - 3, jedoch mit zusätzlicher Entleer- und Spüleinrichtung;
- Fig. 8A und 8B: ein Detail von Fig. 8 in zwei Alternativen;
- Fig. 10 - 12: einen Stärkeabscheider;
- Fig. 13 - 15: einen Benzinabscheider mit Schwimmerverschluß (Fig. 14 teilweise im Schnitt);
- Fig. 16 - 18: einen Ölabscheider mit zusätzlicher Koaleszenz-Abscheidestute (Fig. 16 teilweise und Fig. 17 ganz geschnitten);
- Fig. 19: ähnlich Fig. 17 einen Ölabscheider mit anderer Bauart des Koaleszenzfilters;
- Fig. 20: einen erfindungsgemäßen Fettabscheider mit zusätzlichen Sammelbehältern, nur in Seitenansicht;
- Fig. 21 und 22: einen Abscheider in unterirdischer Installation

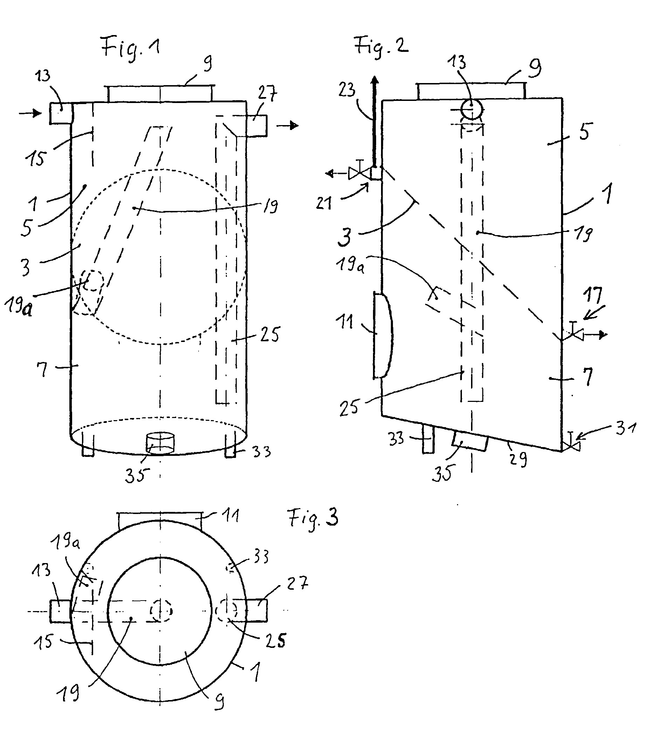

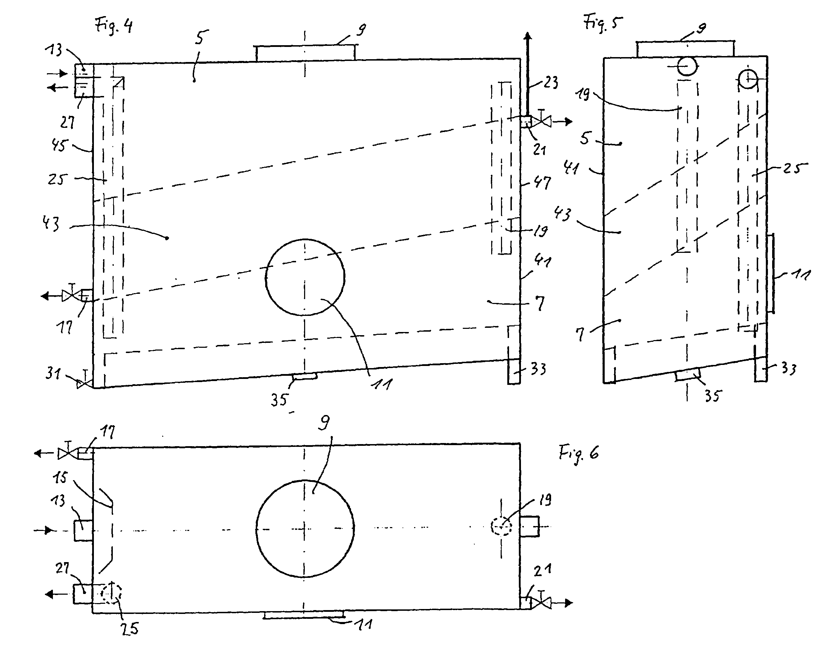

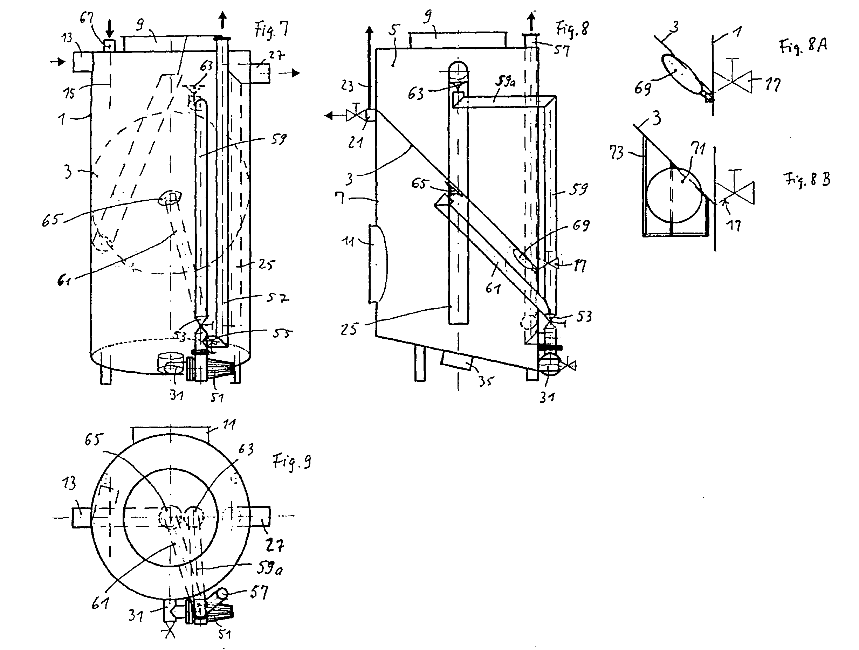

Der in Fig. 1 - 3 dargestellte Fettabscheider zum Abscheiden von Frischfett, z. B. aus Abwässern von Großküchenanlagen oder dergleichen, besteht aus einem Abscheidebehälter 1 in Form eines aufrechtstehenden, kreisrunden Zylinders, der durch einen schrägen Trennboden 3 in eine obere Schlammfangkammer 5 und eine untere Abscheidekammer 7 unterteilt ist. Der Trennboden 3 ist eben und kann gegenüber der vertikalen Achse des Behälters 1 eine Neigung z. B. im Bereich von 30° - 60°, vorzugsweise eine Neigung von ca. 45°, aufweisen. Die Schlammfangkammer 5 ist durch eine Revisionsöffnung 9 mit Deckel in der oberen Behälterwandung zugänglich, den Zugang zur Abscheidekammer 7 ermöglicht eine seitliche Revisionsöffnung 11 mit Deckel in der Behälterumfangswandung.

In die Schlammfangkammer 5 mündet an ihrem oberen Ende ein Zulauf 13 für das Abwasser bzw. für das zu trennende Flüssigkeitsgemisch. Dem Zulauf 13 ist eine Prallwand 15 zur Strömungsberuhigung nachgeordnet. Die im Abwasser enthaltenen Sinkstoffe setzen sich als Schlamm auf der Oberseite des Trennbodens 3 ab und rutschen auf diesem entlang nach unten bis zum unteren Bereich der Schlammfangkammer 5, der einen nach unten spitz zulaufenden Schlammsumpf bildet, an dessen tiefsten Stelle ein Schlammabzug 17 mit Verschlußorgan angeordnet ist.

In dem Behälter 1 ist ein Verbindungsrohr 19 angeordnet, das die Schlammfangkammer 5 mit der Abscheidekammer 7 verbindet und den Trennboden 3 durchdringt. Die obere Einmündung des Verbindungsrohres 19 liegt vorzugsweise im achsnahen Bereich der Abscheidekammer 7 und in solchem Abstand unter dem sich im Schlammfang 5 einstellenden freien Wasserspiegel, daß das im Verbindungsrohr 19 nach unten strömende Wasser einen Sog erzeugt, der etwa bereits aufschwimmende Fettanteile in der Schlammfangkammer 1 mitreißt. Wie aus Fig. 1 ersichtlich, verläuft das Verbindungsrohr 19 schräg nach unten geneigt in Richtung auf eine nahe der Umfangswandung liegende Stelle. Dort ist am unteren Ende des Verbindungsrohres 19 ein Rohrstutzen 19a angefügt, der ungefähr in Tangentialrichtung und mit einer nach oben gerichteten Neigung verläuft, so daß das aus der Schlammfangkammer 5 durch das Verbindungsrohr 19 in die Abscheidekammer 7 fließende Flüssigkeitsgemisch mit einer tangential und nach oben gerichteten Bewegungskomponente in die Abscheidekammer 7 eintritt. In der Abscheidekammer trennen sich die spezifisch leichteren Stoffe, insbesondere Fett, von dem Wasser und sammeln sich im oberen Bereich der Abscheidekammer 7 unterhalb der Trennwand 3 an, der einen nach oben spitz zulaufenden Leichtstoffsammelraum bildet. An dessen höchsten Stelle ist ein Fettabzug 21 mit Absperrorgan vorgesehen, durch den das abgeschiedene Fett abgezogen und z. B. in einem Sammelbehälter aufgefangen werden kann. Der Fettabzug 21 ist ferner mit einer schematisch dargestellten Entlüftung 23 versehen, die dafür sorgt, daß die Abscheidekammer 7 immer ohne Freispiegel vollständig bis zu ihrem höchsten Punkt gefüllt ist.

Für den Abzug des Reinwassers aus der Abscheidekammer 7 dient ein Steigrohr 25, das mindestens annähernd lotrecht innerhalb des Behälters 1 verläuft, vom unteren Bereich der Abscheidekammer 7 ausgeht, die Trennwand 3 durchdringt und am oberen Ende mit einer seitlich abzweigenden Abzugsleitung 27 für das Reinwasser verbunden ist.

Der Boden 29 der Abscheidekammer 7 ist leicht gegen die Horizontale geneigt, und am tiefsten Punkt der Abscheidekammer 7 ist ein Entleeranschluß 31 mit Absperrorgan angeordnet, um den gesamten Abscheider zu entleeren. Der Abscheidebehälter 1 kann auf dem (nicht dargestellten) Fundament am tiefsten Punkt seines Bodens 29 und mit zwei zusätzlich vorgesehenen Beinen 33 aufgestützt sein. Unter dem Boden kann ein Schwingungserreger 35 angeordnet sein, der den Abscheider in Vibration versetzen kann, um die Ablösung von Sinkstoffen oder Leichtstoffen von den Wänden des Abscheidebehälters zu begünstigen.

Der in Fig. 1 - 3 dargestellte Abscheider bietet bei besonders einfacher, preisgünstiger und platzsparender Bauweise die folgenden betrieblichen Vorteile: Das Abscheidegut, d. h. die Sinkstoffe aus der oberen Schlammfangkammer und die Leichtstoffe aus der unteren Abscheidekammer, können durch die vorgegebenen hydrostatischen Druckverhältnisse entnommen und z. B. in Fässer abgezogen werden, ohne daß für diesen Entnahmevorgang eine zusätzliche Druckerhöhung (z. B. Verwendung einer Handpumpe, Erzeugen eines Staus im Reinwasserablauf usw.) erforderlich ist. Das sich an der Unterseite des Trennbodens 3 ansammelnde Fett steht über den Trennboden 3 in Wärmekontakt mit dem zulaufenden Abwasser in der Schlammfangkammer 5. Da das zulaufende Abwasser, z. B. aus Großküchen und ähnlichen Betrieben, in der Regel mit erhöhter Temperatur zufließt, trägt es dazu bei, das Fett an der Unterseite des Trennbodens 3 zu erwärmen und in flüssigem, abzugsfähigen Zustand zu erhalten. Eine zusätzliche Beheizung der Leichtstoffe ist daher entbehrlich, kann aber, falls erforderlich, ebenfalls vorgesehen werden. Beispielsweise kann der Trennboden 3 als Doppelwand ausgebildet werden, in deren Innenraum eine erwärmte Flüssigkeit, z. B. Heizungswasser oder elektrisch beheiztes Trägeröl, zirkuliert.

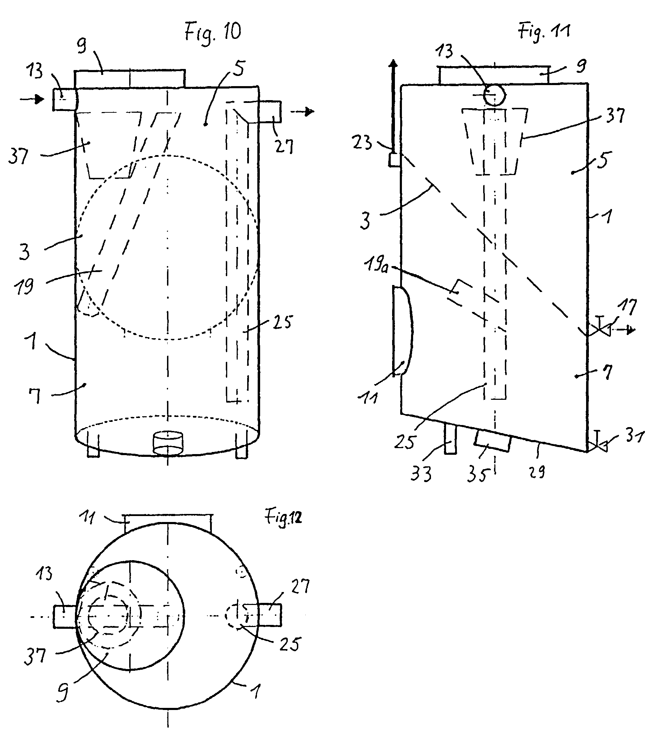

Die in Fig. 4 - 6 dargestelle Ausführungsform des Fettabscheiders stimmt mit der gemäß Fig. 1 - 3 weitgehend überein mit der Ausnahme, daß der Abscheidebhälter 41 keinen runden, sondern rechteckigen Grundriß hat. Ein ebener Zwischenboden 43, der den Abscheidebehälter 41 in die obere Schlammfangkammer 5 und die untere Abscheidekammer 7 trennt, ist so eingebaut, daß er in Richtung parallel zu den Schmalseiten des Abscheidebehälters 41 eine Neigung von ca. 30° (Fig. 5) und zusätzlich parallel zu den Längsseiten des Abscheidebehälters 41 eine Neigung von z. B. ca. 10° (Fig. 4) aufweist, so daß er in Richtung seines größten Gefälles um ca. 40° zur Horizontalen geneigt ist. Alle übrigen Einrichtungen des Abscheiders sind analog ausgebildet wie bei der Ausführungsform nach Fig. 1 - 3 und sind deshalb auch mit den gleichen Bezugszeichen bezeichnet. Der Zulauf 13 mit nachgeordneter Prallwand 15, der Reinwasserablauf 27 und der Schlammabzug 17 sind alle an der gleichen Schmalseite 45 des Abscheidebehälters 41 angeordnet (vgl. Fig. 4 und Fig. 6), während auf der gegenüberliegenden Schmalseite 47 nur der Fettabzug 21 mit Entlüftung 23 an der höchsten Stelle unterhalb des Zwischenbodens 43 angeordnet ist. Nahe dieser Schmalseitenwand 47 erstreckt sich das Verbindungsrohr 19, das die Schlammfangkammer 5 mit der Abscheidekammer 7 verbindet, senkrecht nach unten. Mit der Ausführungsform nach Fig. 4 - 6 werden bei ähnlich einfacher, preisgünstiger, robuster und platzsparender Bauweise die gleichen betrieblichen Vorteile erzielt wie bei der Ausführungsform nach Fig. 1 - 3.

Die in Fig. 7 - 9 darstellte Ausführungsform des Fettabscheiders entspricht in ihrer Bauweise der nach Fig. 1 - 3. Die übereinstimmenden Bauteile sind mit den gleichen Bezugszeichen versehen und werden im folgenden nicht näher erläutert. Die Ausführungsform nach Fig. 7 - 9 ist jedoch zusätzlich mit einer Entleer- und Spüleinrichtung versehen. Der von der tiefsten Stelle der Abscheidekammer 7 ausgehende Entleerungsanschluß 31 ist an die Saugseite einer Pumpe 51 angeschlossen, deren Druckseite über selektiv steuerbare Ventile 53, 55 wahlweise mit einem Entleerungssteigrohr 57 oder mit zwei Spülrohren 59, 61 verbindbar ist. Das eine Spülrohr 59 verläuft an der Außenseite des Abscheidebehälters 1 nach oben, dann mit einem horizontalen Abschnitt 59a in das Innere des Abscheidebehälters 1 hinein und hat am Ende eine nach oben gerichtete Ausmündung mit einem Strahlverteiler 63 zum Erzeugen eines radial nach allen Seiten austretenden Flachstrahls, der bei vollem Abscheidebehälter 1 die Wasseroberfläche bestreicht und bei zunehmender Entleerung die Innenwände der Schlammfangkammer 5 abspült. Das andere Spülrohr 61 verläuft vom Absperrorgan 53 schräg nach oben in das Innere der Abscheidekammer 7 hinein und endet in einem Strahlverteiler 65, der dicht an der Unterseite des Trennbodens 3 angeordnet ist und einen diese Unterseite abspülenden Flachstrahl erzeugen kann.

Soll der Abscheidebehälter 1 entleert werden, so wird zunächst das Absperrorgan 55 für das Entleerungssteigrohr 57 geschlossen und das Absperrorgan 53 zu den Spülrohren 59, 61 geöffnet. Die Pumpe 51 wird in Betrieb genommen, so daß Wasser aus dem Entleerungsanschluß 31 abgepumpt und über die Spülrohre 59, 61 in die Schlammfangkammer 5 und die Abscheidekammer 7 zurückgepumpt wird, wodurch eine kräftige Umwälzung und Vermischung des Abscheiderinhalts und gleichzeitig über die Strahlverteiler 63, 65 ein Abspülen der Innenwände und insbesondere der Unterseite des Trennbodens 3 bewirkt wird. Nach ausreichendem Spülvorgang wird das Absperrorgan 53 geschlossen und das Aufsperrorgan 55 geöffnet, so daß nun der gesamte Abscheideinhalt aus dem Entleerungsanschluß 31 abgepumpt und über das Entleerungssteigrohr 57 z. B. in ein angeschlossenes Transportfahrzeug weggempumpt wird. Für ein anschließendes Wiederbefüllen des Abscheiders kann ein zusätzlicher Füllanschluß 67 vorgesehen sein.

Beim Entleeren des Abscheiders ist es wichtig, daß auch der Inhalt der oberen Schlammfangkammer 5 nicht über den Schlammabzug 17, sondern über den Entleerungsanschluß 31 abgezogen wird. Zu diesem Zweck ist im tiefsten Bereich des Trennbodens 3 eine Öffnung mit einem Verschlußorgan 69 vorgesehen, das in Fig. 8A in größerem Maßstab dargestellt ist und z. B. als Schwimmerklappe ausgebildet sein kann. Solange das untere Abscheideabteil 7 gefüllt ist, ist die Schwimmerklappe 69 geschlossen. Wird die Abscheidekammer 7 über den Entleerungsanschluß 31 und die Pumpe 51 entleert, so öffnet die Schwimmerklappe 69, so daß auch der Inhalt der Schlammfangkammer 5 durch die Öffnung im Trennboden 3 in die Abscheidekammer 7 abfließen und über den Entleerungsanschluß 31 abgepumpt werden kann.

Fig. 8B zeigt eine alternative Ausführungsform, bei der das Verschlußorgan als Schwimmerkugel 71 mit zugehörigem Kugelkäfig 73 ausgebildet ist.

Fig. 10 - 12 zeigen eine Ausführungsform des Abscheiders, der für das Abscheiden von Stärke aus Abwasser bestimmt ist. Die Bauform stimmt weitgehend überein mit der von Fig. 1 - 3, und entsprechende Teile sind mit den gleichen Bezugszeichen wie in Fig. 1 - 3 bezeichnet. Der runde Abscheidebehälter 1 wird durch den um ca. 45° geneigten Trennboden 3 in die obere Schlammfangkammer 1 und die untere Abscheidekammer 7 geteilt. Die Abscheidekammer 7 dient in diesem Fall nicht zum Abscheiden von aufschwimmendem Leichtstoff, sondern zum Abscheiden von Stärke, die schwerer ist als Wasser. Deshalb befindet sich am obersten Punkt der Abscheidekammer 7 nur die Entlüftung 23, aber keine Abzugsleitung. Die sich am geneigten Boden 29 der Abscheidekammer 7 absetzende Stärke wird über den Abzug 31 entnommen und kann z. B. in Fässer abgefüllt bzw. einer Verwertung zugeführt werden. In der Schlammfangkammer 5 setzt sich auf der Oberseite des Trennbodens 3 Schlamm vermischt mit Stärke ab, der über den Schlammabzug 17 entnommen werden kann. Dem Abwasserzulauf 13 ist ein Fangkorb oder -eimer 37 zum Auffangen grober Verunreinigungen nachgeordnet. Um besseren Zugang zu dem Fangkorb 37 zu ermöglichen, ist die obere Revisionsöffnung 9 exzentrisch zur Achse des Abscheidebehälters 1 angeordnet. Für alle übrigen Teile gilt die anhand von Fig. 1 - 3 gegebene Beschreibung.

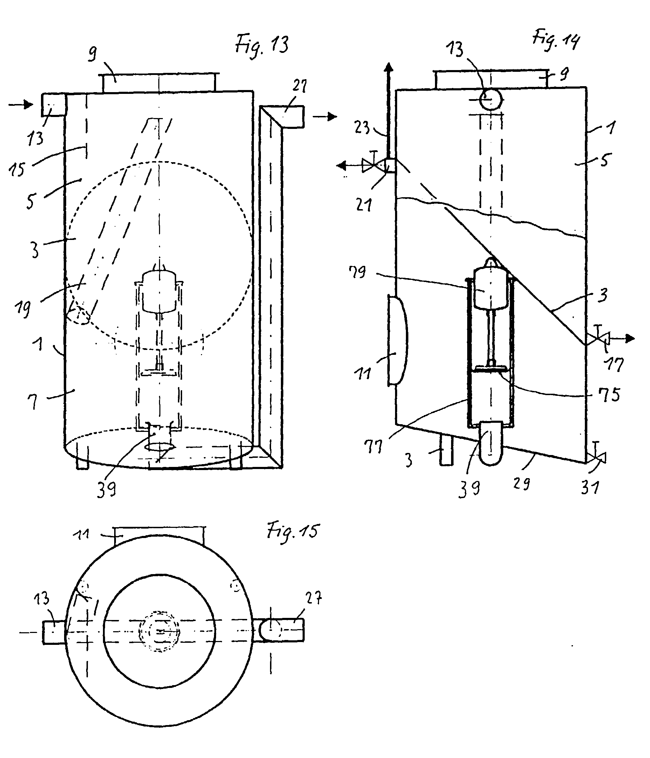

Der in Fig. 13 - 15 dargestellte Abscheider ist ein Benzinabscheider, dessen Grundkonstruktion wiederum mit der gemäß Fig. 1 - 3 übereinstimmt und insoweit mit gleichen Bezugszeichen versehen ist. Das über den Zulauf 13 mit nachgeschalteter Prallwand 15 zulaufende, mit Benzin verunreinigte Abwasser gelangt in die Schlammfangkammer 5, wo sich die Sinkstoffe an der Oberseite des geneigten Trennbodens 3 absetzen und an der tiefsten Stelle der Schlammfangkammer 5 am Schlammabzug 17 abgezogen werden können. Nahe dem Wasserspiegel in der Schlammfangkammer 5, dessen Höhe durch die Höhe des Reinwasserabzugs 27 festgelegt ist, strömt das Wasser in die Einlauföffnung des Verbindungsrohrs 19, wobei Leichtstoffe mitgerissen werden, und gelangt in die untere Abscheidekammer 7, wo das Benzin bzw. die sonstigen Leichtstoffe aufschwimmen, sich an der Unterseite des Trennbodens 3 ansammeln und an der höchsten Stelle der Abscheidekammer 7 über den mit Entlüftung 23 versehenen Benzinabzug 21 abgezogen werden können.

Im Unterschied zur Ausführungsform nach Fig. 1 - 3 verläuft das Steigrohr 25 des Reinwasserabzugs 27 außerhalb des Abscheidebehälters 1 und ist mit einem im Zentrum des Bodens 29 der Abscheidekammer 7 angeordneten, senkrecht nach oben gerichteten Ablaufstutzen 39 verbunden. Das obere Ende des Ablaufstutzens 39 ist als Ventilsitz für ein Schwimmerventil 75 ausgebildet, das in einem Käfig 77 geführt ist und dessen Schwimmer 79 auf den Dichteunterschied zwischen Benzin und Wasser austariert ist, so daß das Schwimmerventil 75 den Ablaufstutzen 39 verschließt, wenn die sich unter dem Trennboden 3 ansammelnde abgeschiedene Benzinschicht eine vorgegebene Schichtdicke erreicht hat.

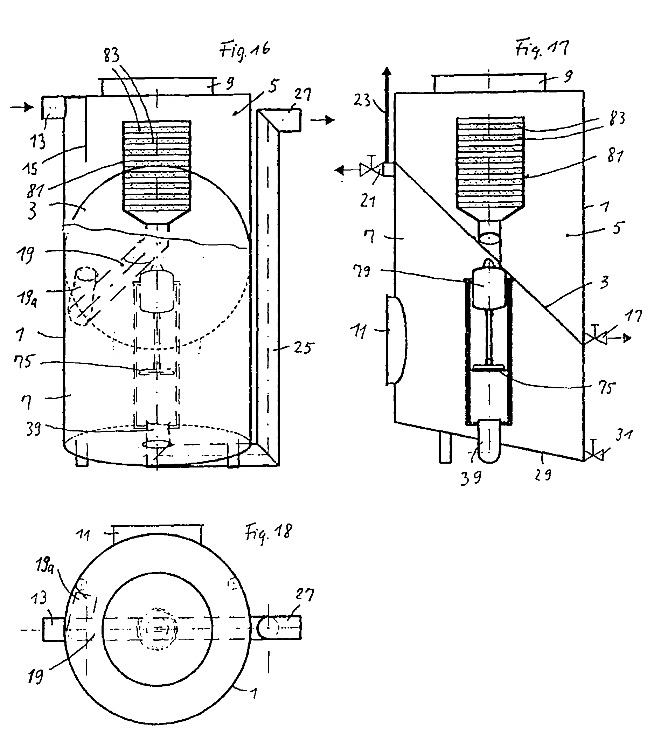

Die in Fig. 16 - 18 dargestellte Ausführungsform des Abscheiders stimmt mit der gemäß Fig. 13 - 15 weitgehend überein und ist insoweit mit gleichen Bezugszeichen versehen. Der Abscheider nach Fig. 16 - 18 ist als Ölabscheider ausgebildet und ist zusätzlich in der Schlammfangkammer 5 mit einem Koaleszenzfilter 81 versehen, welches dem Einlauf des von der Schlammfangkammer 5 zur Abscheidekammer 7 führenden Verbindungsrohres 19 vorgeschaltet ist. Das Koaleszenzfiler 81 besteht aus einer Vielzahl von horizontalen, in Abständen voneinander angeordneten Filtermatten 83, die in einem oben offenen, rohrförmigen Gehäuse angeordnet sind, welches mit dem oberen Ende des Verbindungsrohres 19 verbunden ist. Das vom freien Wasserspiegel in der Schlammfangkammer 5 in das Koaleszenzfilter 81 einströmende Wasser muß die Koaleszenzfiltermatten 83 durchströmen, bevor es durch das Verbindungsrohr 19 in die Abscheidekammer 7 gelangt, wo sich verbliebenes Öl oder sonstige Leichtstoffe an der Unterseite des Trennbodens 3 ansammeln und an der höchsten Stelle durch den Ölabzug 21 abgezogen werden können.

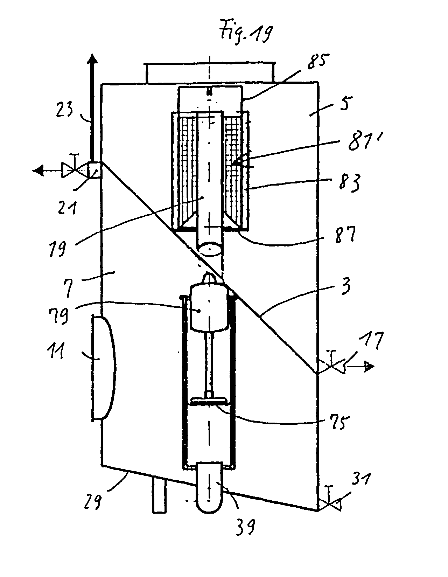

Eine abgewandelte Ausführungsform des Abscheiders nach Fig. 16 - 18 ist in Fig. 19 nur im Schnitt dargestellt. Sie unterscheidet sich von der vorhergehenden Ausführungsform nur durch die Bauform des Koaleszenzfilters 81', das in diesem Fall als Ringfilter ausgebildet ist, mit einem zylindrischen Koaleszenzfiltermedium 83, das von einem Stützkorb getragen wird, und oberen und unteren, wasserundurchlässigen Abschlußwänden 85, 87. Wasser aus der Schlammfangkammer 5 muß durch das Koaleszenzfiltermedium 83 strömen, bevor es von oben in das Verbindungsrohr 19 und durch dieses in die Abscheidekammer 7 strömen kann. Bezüglich aller üblichen Einzelheiten wird auf die Beschreibung zu Fig. 16 - 18 verwiesen.

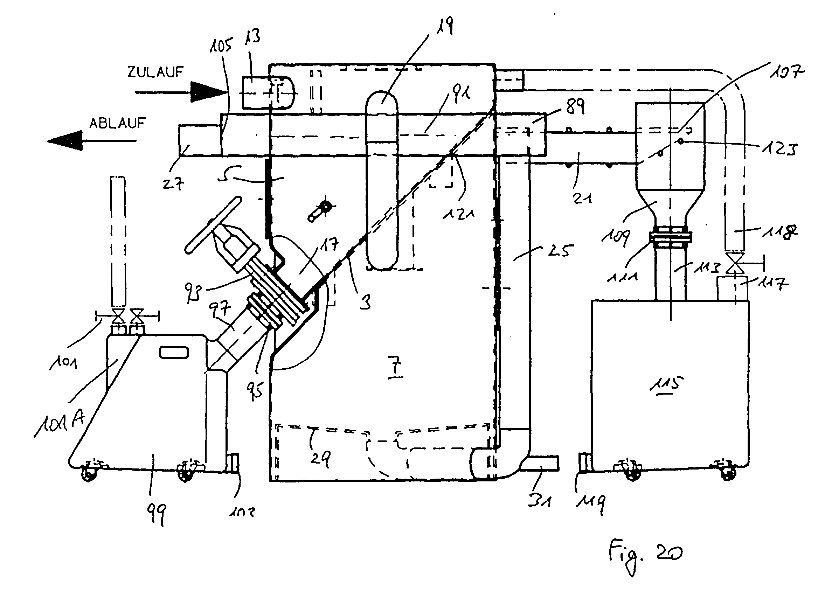

Die in Fig. 20 schematisch in Seitenansicht dargestellte Ausführungsform des erfindungsgemäßen Abscheiders stimmt, soweit es den eigentlichen Abscheidebehälter 1 betrifft, weitgehend mit der in Fig. 1 - 3 gezeigten Ausführungsform überein. Es werden deshalb gleiche Bezugszeichen wie in Fig. 1 - 3 verwendet, und für die Detailbeschreibung wird auf die Beschreibung zu Fig. 1 - 3 verwiesen. Nachstehend werden nur die von Fig. 1 - 3 abweichenden Details beschrieben.

Dem Zulauf 13 ist eine Niveauausgleichsrinne 89 bekannter Bauart zugeordnet, die für die Aufrechterhaltung eines möglichst konstanten Wasserspiegels 91 in der Schlammfangkammer 5 sorgt, und damit für konstante Einlaufbedingungen in die obere Öffnung des zur Abscheidekammer 7 führenden Verbindungsrohres 19. Das Klarwasser fließt über eine lange Wehrkante 105 in die Ringrinne, so daß Zulaufstöße abgefangen werden und nur zu geringen Schwankungen des Niveaus 91 führen.

Der an der tiefsten Stelle des geneigten Trennbodens 3 angeordnete Schlammabzug 17 ist über einen Absperrschieber 93, eine lösbare Kupplung 95 und einen flexiblen Anschlußstutzen 97 mit einem Schlammsammelbehälter 99 verbunden, der in geeigneten Zeitabständen aus der Schlammfangkammer 5 abgezogenen Schlamm aufnehmen kann, so daß das Volumen der Schlammfangkammer 5 weitgehend für den Abscheidevorgang verfügbar bleibt. Ein vom Schlammsammelbehälter 99 nach oben führender Stutzen ist mit einem Entlüftungsventil 101 versehen. Ferner hat der Schlammsammelbehälter 99 einen bodennahen Entleerungsanschluß 103 mit Absperrorgan, an den z. B. der Absaugschlauch eines Entsorgungsfahrzeugs mit Pumpe angeschlossen werden kann.

Der Schlammsammelbehälter 99 hat unter dem Entlüftungsventil 101 einen Hohlraum 101A, in dem sich bei geschlossenem Ventil 101 Luft befindet. Nach dem Öffnen des Ventils kann der unter dem Hohlraum stehende Schlamm bzw. Restwasser in den Hohlraum steigen. Beim Auswechseln des Behälters wird dennoch kein Schlamm oder Restwasser verschüttet.

Aus der Abscheidekammer 7 führt im Inneren des Abscheidebehälters 1 das Steigrohr 25 zum Reinwasserablauf 27, dem das Überlaufwehr 105 vorgelagert ist.

An dem höchsten Punkt der Abscheidekammer 7 ist unterhalb des Trennbodens 3 der Fettabzug 21 angeschlossen, der als beheiztes Rohr ausgebildet ist, das bis zu einer Überlaufkante 107 nach oben gezogen ist. Die Überlaufkante 107 liegt in einer solchen Höhe, daß sich das Fett aufgrund des Wichteunterschiedes zu Wasser überschichten und somit ständig ablaufen kann. Die Überlaufkante ist mit dem davor liegenden Bereich, in dem sich Fett bewegt, beheizt. Über die Kante 107 überlaufendes Fett gelangt in ein Fettablaufrohr 109, das vorzugsweise ganz oder teilweise transparent ausgebildet ist, um den Ablauf des Fettes beobachten zu können. Über einen Absperrschieber 111 und eine Flexverbindung 113 ist das Fettablaufrohr 109 mit einem Fettsammelbehälter 115 verbunden, der mit einem Entlüftungsstutzen 117 und einem bodennahen Entleerungsauslaß 119, jeweils mit Absperrorgan, versehen ist.

Auch unterhalb des Entlüftungsventils 117 befindet sich ein Hohlraum, entsprechend dem Hohlraum 101A, in dem bei geöffnetem Ventil 117 Fett eintreten kann, so daß aus dem Wechselbehälter kein Fett austritt, wenn die Kupplung gelöst wird.

Der dem Fettabzug 21 benachbarte oberste Bereich des Trennbodens 3 ist als beheizbare Fläche 121 ausgebildet, so daß das abgeschiedene Fett in diesem Bereich in abzugsfähigem, flüssigem Zustand gehalten werden kann. Auch das den Fettabzug 21 bildende Abzugsrohr und die Überlaufkante 7 sind mit geeigneten Heizeinrichtungen versehen, wie z. B. bei 123 angedeutet. Auf diese Weise kann ein kontinuierlicher Ablauf des durch Erwärmung flüssig gehaltenen Fettes aus der Abscheidekammer 7 über das Abzugsrohr 21, die Überlaufkante 107 und das Fettablaufrohr 109 in den Fettsammelbehälter 115 hinein erfolgen, und zwar unter dem hydrostatischen Druck des im Abscheidebehälter 1 befindlichen Wasservolumens, dessen Spiegelhöhe 91 durch die dem Einlauf 13 zugeordnete Überlaufkante 89 festgelegt ist.

Der Boden 29 der Abscheidekammer 7 ist trichterförmig ausgebildet, so daß der Entleerungsanschluß 31 (mit einem nichtdargestellten Absperrorgan) am tiefsten Punkt des Steigrohrs 25 liegt. Desweiteren ist der Entlüftungsstutzen 117 als Brücke 118 zum oberen Abscheidebehälter verlängert.

Im Betrieb der Abscheideanlage ist das Absperrorgan 93 zum Schlammsammelbehälter 99 (mit vorzugsweise einem Fassungsvermögen von über 100 Litern) immer offen. Der Behälter 99 ist beim Anschluß an den Stutzen 97 mit Wasser gefüllt, das beim Einlaufen von Schlamm zurück in die Klarwasserzone des Schlammfangs verdrängt wird. Der Behälter 99 ist somit Teil des Schlammfangvolumens, und in ihm tritt eine Schlammeindickung durch den Druck der Wassersäule auf.

Wenn der Behälter 99 gefüllt ist, was an einem Schauglas erkennbar ist, wird das Absperrorgan 93 geschlossen und das Absperrorgan 101 geöffnet. Dadurch kann der im Anschlußstutzen 97 vorhandene Wasserrest in den Raum unter dem Absperrorgan 101 fließen und läuft beim Lösen der Kupplung 95 nicht aus. Die Kupplung wird behälterseitig mit einem Deckel geschlossen, und das Entlüftungsventil 101 wird geschlossen. In diesem Zustand kann der Behälter abtransportiert und ein Wechselbehälter angeschlossen werden.

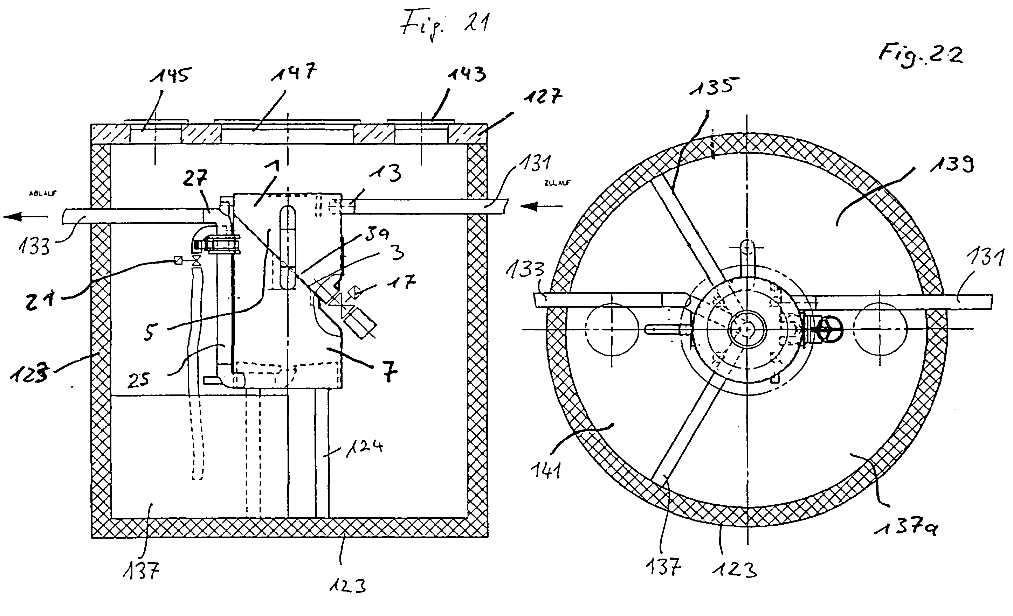

Die Figuren 21 und 22 zeigen in Seitenansicht bzw. Aufsicht eine Einbauvariante für den erfindungsgemäßen Abscheider. Der Abscheider 1, der im wesentlichen anhand der Figuren 1 bis 3 beschrieben wurde, ist bei dieser Einbauvariante vorzugsweise unterirdisch in einem Betongehäuse 123 aufgenommen und steht erhöht auf Füßen 124. Das Gehäuse 123 hat in der Aufsicht einen kreisförmigen Querschnitt, und im Inneren des Gehäuses sind radial verlaufende Trennwände 135 und 137 vorgesehen, die in der Mitte zusammengeführt sind (vgl. Fig. 22) und sich in der Höhe bis kurz unter die Unterkante des Abscheiders 1 erstrecken. Auf diese Weise werden sektorförmige Speicherabteile 139 und 141 gebildet. Der Schlammabzug 17 ist oberhalb des Speicherabteils 139 angeordnet und mündet in dieses Speicherabteil, der Fett-, Benzin- oder Ölabzug 21 ist oberhalb des Speicherabteils 141 angeordnet und mündet in dieses Speicherabteil. Die mit den entsprechenden Abzügen verbundenen Ventile werden von einer Schaltwarte aus ferngesteuert, so daß Schlamm und Fett in die entsprechenden Speicherabteile gesteuert abgegeben werden kann. Der Füllstand der Speicherabteile wird durch Sensoren (nicht dargestellt) abgefühlt. Der Zulauf ist mit einer entsprechenden Zulaufleitung 131 verbunden und der Ablauf 27 mit einer entsprechenden Ablaufleitung 133.

Der Behälter 123 ist mit einem Deckel 127 versehen, der eine Revisionsöffnung 147 und Abpumpöffnungen 143 und 145 aufweist. Das in dem Speicherabteil 139 gesammelte Fett wird über die Abpumpöffnung 143 abgesaugt und der im Speicherabteil 141 gesammelte Schlamm über die Öffnung 145. Die drei Öffnungen 143, 145 und 147 sind mit lösbaren Deckeln verschließbar.

### Bezugszeichenliste

- 1: Abscheidebehälter
- 3: Trennboden
- 5: Schlammfangkammer
- 7: Abscheidekammer
- 9: Revisionsöffnung
- 11: Revisionsöffnung
- 13: Zulauf
- 15: Prallwand
- 17: Schlammabzug
- 19: Verbindungsrohr
- 19a: Rohrstutzen
- 21: Fettabzug, Benzinabzug, Ölabzug
- 23: Entlüftung
- 25: Steigrohr
- 27: Abzugsleitung
- 29: Boden
- 31: Entleerungsanschluß
- 33: Beine
- 35: Schwingungserreger
- 37: Fangkorb
- 39: Ablaufstutzen
- 41: Abscheidebehälter
- 43: Zwischenboden
- 45: Schmalseite
- 47: Schmalseite
- 51: Pumpe
- 53: Ventil
- 55: Ventil
- 57: Entleerungssteigrohr
- 59: Spülrohr
- 59a: horizontaler Abschnitt
- 61: Spülrohr
- 63: Strahlverteiler
- 65: Strahlverteiler
- 67: Füllanschluß
- 69: Schwimmerklappe
- 71: Schwimmerkugel
- 73: Kugelkäfig
- 75: Schwimmerventil
- 77: Käfig
- 79: Schwimmer
- 81: Koaleszenzfilter
- 83: Koaleszenzfiltermatten
- 85: Abschlußwand
- 87: Abschlußwand
- 89: Niveauausgleichsrinne
- 91: Wasserspiegel
- 93: Absperrschieber
- 95: Kupplung
- 97: Anschlußstutzen
- 99: Schlammsammelbehälter
- 101: Entlüftungsventil
- 101a: Luftraum
- 103: Entleerungsanschluß
- 105: Überlaufwehr
- 107: Überlaufkante
- 109: Fettablaufrohr
- 111: Absperrschieber
- 113: Flexverbindung
- 115: Fettsammelbehälter
- 117: Entlüftungsstutzen
- 118: Verlängerung des Entlüftungsstutzen
- 119: Entleerungsauslaß
- 121: beheizbare Fläche
- 123: Betongehäuse
- 124: Standfüße
- 127: Deckel
- 131: Zulaufrohr
- 133: Ablaufrohr
- 139: Fettsammelabteil
- 141: Schlammsammelabteil
- 137: Trennwand
- 135: Trennwand
- 143: Abpumpöffnung
- 145: Abpumpöffnung
- 147: Revisionsöffnung

## Patentansprüche

1. Abscheider zum Abtrennen von Sinkstoffen und Leichtstoffen aus Wasser, mit einem Abscheidebehälter (1), der durch einen Trennboden (3) in eine obere Schlammfangkammer (5) und eine untere Abscheidekammer (7) geteilt ist, wobei die Schlammfangkammer (5) einen Einlauf (13) für das zu reinigende Wasser und die Abscheidekammer (7) einen Reinwasserablauf (25, 27) mit Überlaufkante und einen Abzug (21) für Leichtstoffe aufweist und wobei zwischen Schlammfangkammer (5) und Abscheidekammer (7) eine Verbindungsleitung (19) mit Überlauf in der Schlammfangkammer (5) vorgesehen ist,
dadurch **gekennzeichnet,** daß der Trennboden (3) gegen die Horizontale geneigt ist und in der Schlammfangkammer (5) einen nach unten spitz zulaufenden Schlammsumpf und in der Abscheidekammer (7) einen nach oben spitz zulaufenden Leichtstoffsammelraum begrenzt, und daß eine Schlammabzugsleitung (17) im Bereich des tiefsten Punktes der Schlammfangkammer (5) und die Leichtstoffabzugsleitung (21) im Bereich des höchsten Punktes der Abscheidekammer angeschlossen ist.

2. Abscheider nach Anspruch 1, dadurch **gekennzeichnet,** daß die Abscheidekammer (7) ohne Freispiegel betreibbar ist.

3. Abscheider nach Anspruch 1 oder 2, dadurch **gekennzeichnet,** daß der Schlammabzug (17) bei ca. 1/4 und der Fettabzug (21) bei ca. 3/4 der Gesamthöhe des Abscheidebehälters (1) angeordnet ist.

4. Abscheider nach Anspruch 1, 2 oder 3, dadurch **gekennzeichnet,** daß der Trennboden (3) als Wärmeaustauschfläche zwischen der Schlammfangkammer (5) und der Abscheidekammer (7) ausgebildet ist.

5. Abscheider nach einem der Ansprüche 1 - 4, dadurch **gekennzeichnet,** daß am höchsten Punkt der Abscheidekammer (7) eine Entlüftung (23) angeschlossen ist, wodurch die Abscheidekammer (7) im Betrieb ohne Freispiegel vollständig gefüllt ist.

6. Abscheider nach einem der Ansprüche 1 - 5, dadurch **gekennzeichnet,** daß die Verbindungsleitung (19) in der Abscheidekammer (7) eine aufwärts gerichtete Ausmündung (19a) aufweist.

7. Abscheider nach einem der Ansprüche 1 - 6, dadurch **gekennzeichnet,** daß der Abscheider als Fettabscheider ausgebildet ist und daß mindestens im oberen Bereich des Trennbodens (3) und/oder an der Leichtstoffabzugsleitung (21) Heizeinrichtungen zum Beheizen und damit Verflüssigen des abgeschiedenen Fettes vorgesehen sind.

8. Abscheider nach einem der Ansprüche 1 - 7, dadurch **gekennzeichnet,** daß vor dem Reinwasserablauf (27) eine Rinne mit einem Überlaufwehr (105) vorgesehen ist.

9. Abscheider nach einem der Ansprüche 1 - 8, dadurch **gekennzeichnet,** daß die Überlaufkante (107) für Leichtstoffe so angeordnet ist, daß ständig Leichtstoffe überlaufen können und die Überlaufkante beheizt ist.

10. Abscheidebehälter nach einem der Ansprüche 1 - 9, **gekennzeichnet** durch einen Fettsammelbehälter (115) mit einem Entlüftungsventil (117), wobei sich bei geschlossenem Ventil unterhalb des Ventils ein Lufthohlraum befindet, so daß beim Öffnen des Ventils das unter dem Hohlraum stehende Fett in den Hohlraum ansteigen kann.

11. Abscheider nach einem der Ansprüche 1 - 10, dadurch **gekennzeichnet,** daß die Schlammfangkammer (5) kommunizierend mit einem Schlammsammelbehälter (99) verbunden ist.

12. Abscheider nach Anspruch 1, dadurch **gekennzeichnet,** daß der Schlammsammelbehälter (99) ein Ventil (101) aufweist und daß sich im geschlossenen Zustand des Ventils unterhalb des Ventils ein Lufthohlraum (101A) befindet, so daß der unterhalb des Lufthohlraums stehende Inhalt bei Öffnung des Ventils in den Hohlraum eindringen kann.

13. Stärkeabscheider mit vorgeschaltetem Schlammfang, mit einem Abscheidebehälter (1), der durch einen Trennboden (3) in eine obere Schlammfangkammer (5) und eine untere Abscheidekammer (7) geteilt ist, wobei die Schlammfangkammer (5) einen Einlauf (13) für das zu reinigende Wasser und die Abscheidekammer (7) einen Reinwasserablauf (25, 27) mit Überlaufkante aufweist und wobei zwischen der Schlammfangkammer (5) und der Abscheidekammer (7) eine Verbindungsleitung (19) mit Überlauf in der Schlammfangkammer (5) vorgesehen ist, und wobei der Trennboden (3) gegen die Horizontale geneigt ist und in der Schlammfangkammer (5) einen nach unten spitz zulaufenden Schlammsumpf begrenzt, und daß eine schlammabzugsleitung (17) im Bereich des tiefsten Punktes der Schlammfangkammer (5) und ein Stärkeabzug (31) am tiefsten Punkt der Abscheidekammer (7) angeschlossen ist.
